# EUROPÄISCHE PATENTANMELDUNG

(11) **EP 1 698 542 A1**
(43) Veröffentlichungstag der Anmeldung: **06.09.2006**
(21) Anmeldenummer: 06001659.9
(22) Anmeldetag: 26.01.2006
(51) Int. Cl.: B62D 21/14

(54) **Querträger oder Strukturbauteil für ein Kraftfahrzeug**

(30) Priorität: 03.03.2005 DE 102005010331
(71) Anmelder: Behr GmbH & Co. KG, 70469 Stuttgart (DE)
(72) Erfinder: Merkle, Christian, 73655 Plüderhausen (DE); Wolf, Water, 71570 Oppenweiler-Zell (DE)

(57) **Zusammenfassung**

Die Erfindung betrifft einen Querträger, insbesondere für ein Kraftfahrzeug, wobei der Querträger eine Anbindung (4; 104; 204; 304) aufweist, die zur Anbringung des Querträgers an der Struktur des Kraftfahrzeugs oder zur Anbringung von Bauteilen am Querträger dient, wobei der Querträger ein Querträger-Basisteil (1; 101) und mindestens eine Anbindung (4; 104; 204; 304) aufweist, und wobei die Anbindung (4; 104; 204; 304) bereichsweise zumindest in Teilbereichen ein dem Innen- oder Außenprofil eines Querträger-Basisteils (1; 101) entsprechendes Außen- bzw. Innenprofil aufweist, welches Teil eines Kontaktbereichs (5; 105; 205; 305) ist.

## Beschreibung

Die Erfindung betrifft einen Querträger oder ein Strukturbauteil für ein Kraftfahrzeug gemäß dem Oberbegriff des Anspruchs 1.

Aus der DE 102 21 654 A1 ist ein Querträger für ein Kraftfahrzeug bekannt, der aus einer oberen Halbschale und einer unteren Halbschale besteht, die an ihren einander zugewandten Enden Laschen aufweisen, welche durch einen Klebstoff miteinander verklebt sind. Zur Befestigung von Elementen, wie beispielsweise der Lenksäule, ist am Querträger ein Halter mittels mehrerer Schrauben befestigt. Die Schrauben sind nach dem Verschrauben verklebt.

Am Querträger kann eine als Rohr ausgebildete Verstärkung angebracht sein, wobei das Rohr an seinen Enden zwecks Vereinfachung der Anbringung am Querträger in seinem Querschnitt verändert sein kann.

Femer sind Querträger oder andere Strukturbauteile bekannt, an denen Halter angeschweißt oder auf sonstige Weise angebracht sind.

Derartige Querträger lassen jedoch noch Wünsche offen.

Es ist Aufgabe der Erfindung, einen verbesserten Querträger zur Verfügung zu stellen.

Diese Aufgabe wird gelöst durch einen Querträger, ein Frontend- oder Strukturbauteil mit den Merkmalen des Anspruchs 1, Vorteilhafte Ausgestaltungen sind Gegenstand der Unteransprüche. Der Einfachheit halber wird hierauf im Folgenden lediglich auf einen Querträger Bezug genommen, jedoch kann ein entsprechend ausgebildetes Element auch an anderen Stellen als sonstiges Strukturbauteil verwendet werden.

Erfindungsgemäß ist ein Querträger vorgesehen, insbesondere für ein Kraftfahrzeug, wobei der Querträger eine Anbindung aufweist, die zur Anbringung des Querträgers an der Struktur des Kraftfahrzeugs oder zur Anbringung von Bauteilen am Querträger dient, wobei der Querträger ein Querträger-Basisteil und mindestens eine Anbindung aufweist, und wobei die Anbindung bereichsweise zumindest in Teilbereichen ein dem Innen- oder Außenprofil eines Querträger-Basisteils entsprechendes Außen- bzw. Innenprofil aufweist, welches Teil eines Kontaktbereichs ist. Dabei richten sich die Abmessungen der Anbindung nach den entsprechenden Abmessungen des Querträger-Basisteils, in bzw. auf welches die Anbindung gesteckt und mit demselben sie verbunden ist. Hierbei können Aussparungen, Schlitze oder sonstige Bereiche vorgesehen sein, welche einem Toleranzausgleich oder gegebenenfalls als Schweißspalt dienen.

Durch die bereichsweise doppelte Wandung wird der Querträger verstärkt, so dass bei entsprechender Ausgestaltung auf zusätzliche Versteifungen verzichtet werden kann. Der Kraftfluss im Querträger kann durch die Anbindung auf relativ einfache und kostengünstige Weise optimiert werden.

Besonders vorteilhaft ist zudem die längenvariable Anbringbarkeit der Anbindung, so dass insbesondere ein relativ großer Toleranzbereich möglich ist. Durch die unterschiedlich große Überdeckung der Kontaktbereiche mit dem Querträger-Basisteil kann eine Variabilität für verschiedene Querträgerlängen auf einfache Weise durch unterschiedlich tiefes Einschieben oder unterschiedlich weites Aufstecken der Kontaktbereiche in beziehungsweise auf das Querträger-Basisteil erreicht werden. Hierfür kann der Kontaktbereich entsprechend länger ausgebildet und Bei bedarf im Bereich von Luftaustritten von Material ganz oder teilweise frei gehalten sein. Zudem können bei entsprechender Ausbildung des Querträger-Basisteils und des Kontaktbereichs in Längsrichtung sehr große Toleranzen vorgesehen sein, da die Genauigkeit des Zusammenbaus der Bauteile oder -gruppen über die entsprechende Vorrichtung zum Zusammenfügen bestimmt wird, indem die Bauteile oder -gruppen entsprechend genau positioniert und dann gefügt werden.

Um die großen Toleranzen in Längsrichtung auszugleichen und eine exakte Querträgerlänge zu ermöglichen, weist der Kontaktbereich am Querträger-Basisteil und der entsprechende Anbindungsbereich an der Anbindung jeweils ein Element zur Indexierung, Fixierung und/oder Lageorientierung beziehungsweise ein entsprechendes, komplementäres Element auf. Als Elemente können beispielsweise Nuten, Sicken oder Anschläge dienen.

Die Anbindung kann mittels Kraft-, Form- oder Stoffschluss oder Kombinationen hiervon erfolgen, wie insbesondere mittels Prägen, Hämmern, Innenhochdruck-Umformen, Außenhochdruck-Umformen, Schweißen, Löten, Eingießen, Kleben, Clinchen, Magnet-Umformen mit dem Querträger-Basisteil verbunden werden. Hierbei sind im Vergleich zu herkömmlichen Querträgern weniger Fügeoperationen erforderlich, so dass die Herstellung weniger arbeitsintensiv und somit kostengünstiger ist.

Bei der Anbindung selbst handelt es sich vorzugsweise um ein Stanz-, Tiefzieh- und/oder Biegeteil.

Die Anbindung weist bevorzugt einen Anbindungsbereich auf, welcher mit dem Kontaktbereichs verbunden ist. Dabei können der Anbindungsbereich und der Kontaktbereich einstückig, beispielsweise als Stanz-Biegeteil, oder zweiteilig ausgebildet und miteinander bevorzugt verschweißt sein. Eine entsprechende Herstellung ist relativ einfach und kann kostengünstig erfolgen. Femer sind entsprechende Anbindungen ausreichend stabil, um insbesondere eine sichere Anbindung eines Querträgers an der A-Säule zu ermöglichen.

Bevorzugt weist die Anbindung einen hohlzylindrischen Kontaktbereich auf, welcher vorzugsweise in einen entsprechenden hohlzylindrischen Bereich des Querträger-Basisteils eingesteckt und mit demselben verbunden ist.

Die Anbindung weist vorzugsweise einen U-förmigen oder einen ein rechteckförmiges Hohlprofil aufweisenden Anbindungsbereich auf.

Zur Anbringung des Querträgers weist der Anbindungsbereich vorzugsweise im Bereich seiner Enden mindestens eine Durchgangsbohrung auf.

Dabei kann ein Teil des Anbindungsbereichs hülsenartig umgebogen und vorzugsweise um die Durchgangsbohrung angeordnet sein. Der umgebogene Teil kann als zusätzliche Versteifung oder Abstützung dienen, um ein Zusammenziehen des Anbindungsbereichs im Rahmen der Montage zu vermeiden.

Bevorzugt wird der Querträger durch zwei Halbschalen gebildet, die miteinander auf bekannte Weise verbunden sind. Dabei können in einer oder beiden Halbschalen versteifende Elemente vorgesehen sein.

Die Halbschalen sind vorzugsweise Strangpress- oder Walzprofile, die in unverformten Zustand ein durchgehendes Profil aufweisen und von denen zumindest eine zumindest in einem ihrer Endbereiche umgeformt ist. Alternativ können die Halbschalen auch durch Hydroformen oder auf sonstige Weise hergestellt sein.

Der Querträger kann zur Erhöhung der Steifigkeit in Längsrichtung verlaufende Rippen, vorzugsweise mindestens vier Rippen, aufweisen.

Im Querträger ist bevorzugt mindestens ein Hohlraum zum Durchführen eines Mediums, wie beispielsweise Luft, vorgesehen, so dass der Querträger einen Teil des Kraftfahrzeug-Belüftungssystems bildet und kein zusätzlicher Bauraum für Luftkanäle erforderlich ist.

Zur Erhöhung der Steifigkeit kann der Querträger in seinem Innenraum und/oder Außenbereich versteifende Elemente aufweisen, wobei es sich beispielsweise um eine Kunststoffstruktur, vorzugsweise mit kreuzförmig verlaufenden Rippen oder einer wabenartigen Struktur, handelt. Diese kann relativ einfach angespritzt werden und erhöht die Steifigkeit deutlich bei relativ geringem Gewicht. Trotz der versteifenden Elemente können im Innenraum des Querträgers Kanäle für ein durchzuführendes Medium vorgesehen sein.

Im Folgenden wird die Erfindung anhand von mehreren Ausführungsbeispielen, teilweise mit Varianten, unter Bezugnahme auf die Zeichnung im Einzelnen erläutert. In der Zeichnung zeigen:

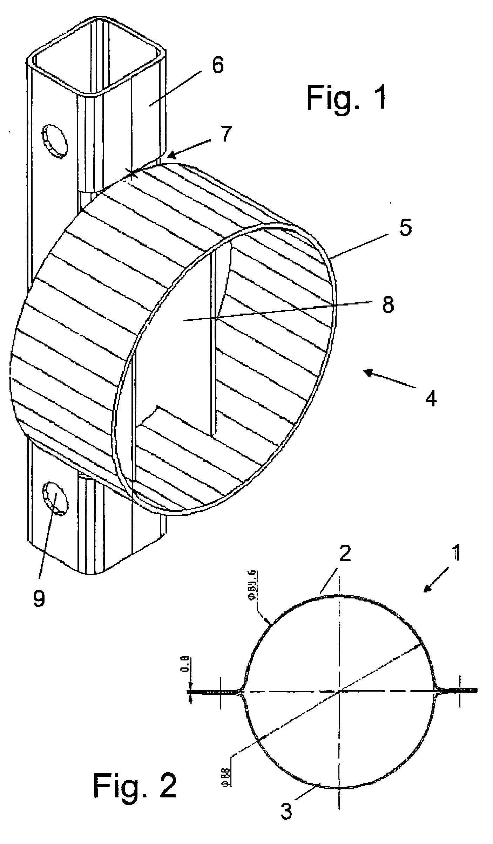

- Fig. 1: eine perspektivische Ansicht einer Anbindung für einen Querträger gemäß dem ersten Ausführungsbeispiel,

- Fig. 2: einen Schnitt durch das Querträger-Basisteil gemäß dem ersten Ausführungsbeispiel,
- Fig. 3: eine perspektivische Ansicht einer Anbindung für einen Querträger gemäß dem zweiten Ausführungsbeispiel,
- Fig. 4: einen Schnitt durch das Querträger-Basisteil gemäß dem zweiten Ausführungsbeispiel,
- Fig. 5: eine perspektivische Ansicht einer Anbindung für einen Querträger gemäß dem dritten Ausführungsbeispiel,

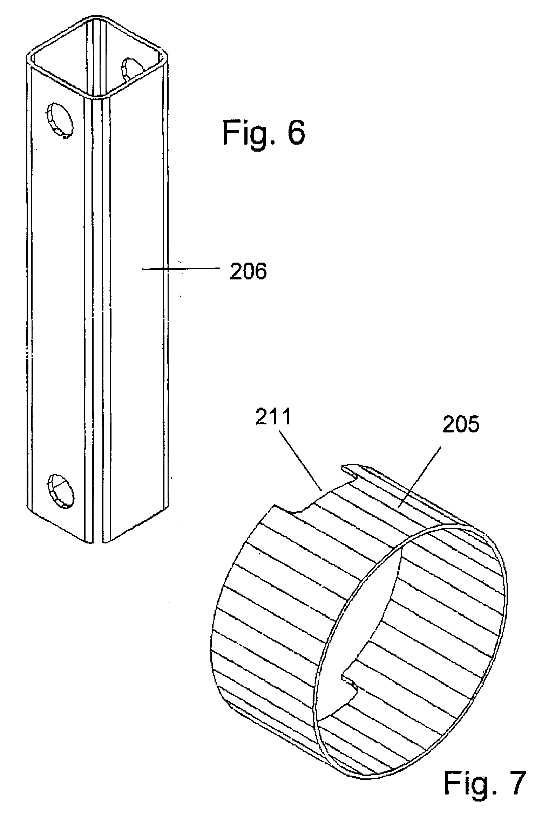

- Fig. 6: eine perspektivische Darstellung eines Teils der Anbindung von Fig. 5,
- Fig. 7: eine perspektivische Darstellung eines zweiten Teils der Anbindung von Fig. 5,
- Fig.8: eine perspektivische Ansicht einer Anbindung für einen Querträger gemäß dem vierten Ausführungsbeispiel,
- Fig. 9: eine andere perspektivische Ansicht der Anbindung von Fig. 8,
- Fig. 10: eine weitere perspektivische Ansicht der Anbindung von Fig. 8,
- Fig. 11: eine perspektivische Ansicht eines ersten stranggepressten Querträger-Basisteils, das dem Querträger-Basisteil des zweiten Ausführungsbeispiel entspricht,

- Fig. 12: eine perspektivische Ansicht eines zweiten stranggepressten Querträger-Basisteils,
- Fig. 13: eine andere perspektivische Ansicht des stranggepressten Querträger-Basisteils von Fig. 12,
- Fig. 14: einen Schnitt durch ein drittes stranggepresstes Querträger-Basisteil,
- Fig. 15: einen Schnitt durch ein viertes stranggepresstes Querträger-Basisteil, und
- Fig. 16: einen Schnitt durch ein fünftes stranggepresstes Querträger-Basisteil.

Ein Querträger-Basisteil 1 eines Kraftfahrzeugs mit integrierter Luftführung wird gemäß dem ersten Ausführungsbeispiel durch eine erste Halbschale 2 und eine zweite Halbschale 3 gebildet. Hierbei handelt es sich jeweils um eine Metallstruktur, die mittels Tiefziehen oder Strangpressen und nachfolgendem Bearbeiten hergestellt ist und zusammen zumindest in den beiden längssekigen Endbereichen zusammen einen kreisförmigen Innenquerschnitt aufweisen. Im Falle des Strangpressens ist das Querträger-Basisteil jedoch bevorzugt einstückig ausgebildet. An den Längsseiten der Halbschalen 2 und 3 sind jeweils nach außen abstehende Ränder vorgesehen, die in Anlage miteinander gebracht und auf bekannte Weise zusammengefügt werden. Der Innenraum zwischen den beiden Halbschalen 2 und 3 ist gemäß dem vorliegenden Ausführungsbeispiel hohlzylindrisch ausgebildet, so dass die Durchführung von Luft möglich ist. Damit ist ein Teil des Belüftungssystems in das Querträger-Basisteil 1 integriert. Anstelle oder neben Luft können auch andere Medien durch das Querträger-Basisteil 1 geleitet werden. Das Querträger-Basisteil 1 weist quer zu seiner Längserstreckung angeordnete Öffnungen (nicht dargestellt) zum Ein- und Ausleiten der Luft auf.

Die Enden des Querträger-Basisteils 1 sind jeweils mit einer Anbindungen 4 versehen, die im Kontaktbereich 5 einen kreisförmigen Außenquerschnitt aufweisen, welcher spielfrei in den entsprechenden Endbereich des Querträger-Basisteils 1 eingeführt und mit dem Querträger-Basisteil 1 fest verbunden ist. Hierbei wird im Folgenden auf das Querträger-Basisteil 1 samt Anbindungen 4 insgesamt als Querträger Bezug genommen.

Jede Anbindung 4 weist den hohlzylindrisch ausgebildeten Kontaktbereich 5 und einen an demselben angebrachten Anbindungsbereich 6 bestehend aus einem Rechteck-Hohlprofil auf, das länger ausgebildet ist als der Außendurchmesser des Kontaktbereichs 5. Dabei ist das Hohlprofil im Bereich des Kontaktbereichs 5 jeweils mit einem quer zur Längsrichtung des Hohlprofils verlaufenden Schlitz 7 versehen und im Bereich im Inneren des Kontaktbereichs 5 in Längsrichtung geschlitzt und die beiden Flächen 8 nach oben gebogen, so dass die Enden der Flächen 8 mit dem Kontaktbereich 5 von innen her in vier linienförmigen Bereiche in Kontakt sind, in weichen Schweißnähte (nicht dargestellt) vorgesehen sind, so dass der Kontaktbereich 5 und der Anbindungsbereich 6 fest miteinander verbunden sind. An den Enden des Anbindungsbereichs 6 ist jeweils eine Durchgangsbohrung 9 quer durch den Anbindungsbereich 6 vorgesehen, mit Hilfe derer der Querträger mittels eines Bolzens (nicht dargestellt) an der Fahrzeugkarosserie angebracht werden kann und zudem andere Bauteile am Querträger angebracht werden können.

Gemäß einer nicht in der Zeichnung dargestellten Variante weisen die Halbschalen eine kreuzrippenartige Kunststoffstruktur auf, wie beispielsweise in der DE 100 65 219 C1 oder der DE 101 25 559 A1 beschrieben. Die Kunststoffstruktur ist an die jeweilige Metallstruktur angespritzt und dient der Versteifung des Querträger-Basisteils. Ansonsten entspricht die Ausgestaltung des Querträgers der des zuvor beschriebenen ersten Ausführungsbeispiels, wobei die Endbereiche frei von der Kunststoffstruktur sind.

Alternativ zur hohlzylindrischen Ausgestaltung der Kontaktbereiche sind auch beliebige andere Querschnittsformen möglich, wie insbesondere ovale, rechteckförmige Querschnitte oder als Vieleck ausgebildete Querschnitte.

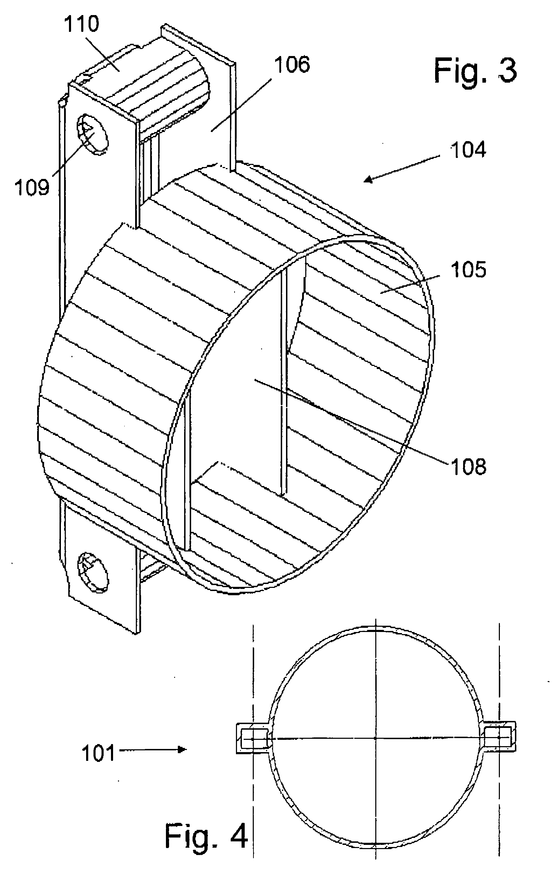

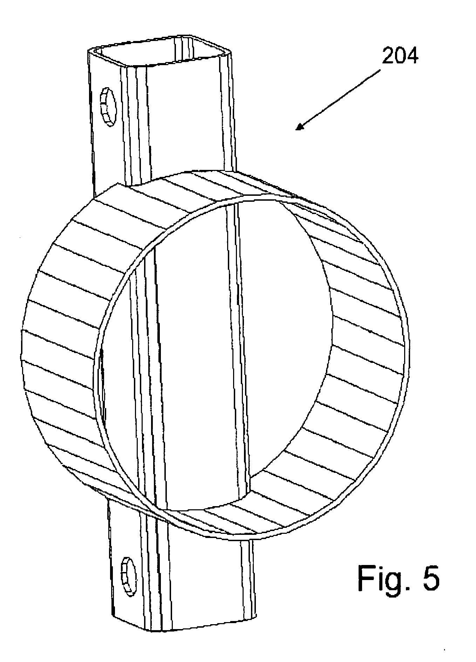

Im Folgenden wird unter Bezugnahme auf die Figuren 3 und 4 das zweite Ausführungsbeispiel näher erläutert. Hierbei sind gleiche oder gleichwirkende Elemente mit um 100 höheren Bezugszeichen als beim ersten Ausführungsbeispiel versehen.

Gemäß dem zweiten Ausführungsbeispiel weist eine Anbindung 104 einen hohlzylindrischen Kontaktbereich 105 und einen U-förmig ausgebildeten Anbindungsbereich 108 auf, wobei flügelartig überstehende Flächen 108 entsprechend den Flächen 8 in den hohlzylindrischen Kontaktbereich 105 ragen und mit demselben verschweißt sind. In den Endbereichen des U-förmigen Anbindungsbereichs 106 ist jeweils eine Durchgangsbohrung 109 vorgesehen, welche beide Schenkel durchdringt. Die äußersten Enden 110 des Zwischenbereichs der Schenkel ragt seitlich über dieselben hinaus und ist derart umgebogen, dass er - in Anlage an die Schenkel von innen - hülsenartig um die Durchgangsbohrung 109 angeordnet ist und ein Zusammenziehen derselben im Rahmen der Montage verhindert. Der gesamte Anbindungsbereich 106 ist als Stanz-Biegeteil ausgebildet.

Das Querträger-Basisteil 101 gemäß dem zweiten Ausführungsbeispiel ist als Stranggussteil ausgebildet und weist einen hohlzylindrischen Querschnitt mit zwei seitlich angeordneten Bereichen mit rechteckförmigem Hohlprofil auf (vgl. Fig. 4).

Gemäß dem dritten Ausführungsbeispiel, bei dem gleiche oder gleichwirkende Elemente mit um 200 höheren Bezugszeichen als beim ersten Ausführungsbeispiel versehen sind, besteht die Anbindung 204 aus einem hohlzylindrischen Kontaktbereich 205 und einem durchgehenden stranggepressten, rechteckförmigen Hohlprofil (Anbindungsbereich 206). Der hohlzylindrische Kontaktbereich 205 weist zwei diametral gegenüberliegende Ausnehmungen 211 auf, welche der Außenkontur des Anbindungsbereichs 206 entspricht, wobei im zusammengesetzten Zustand der Kontaktbereich 205 annähemd bis zur Mitte des Hohlprofils reicht (vgl. Fig. 5). Der Kontaktbereich 205 und der Anbindungsbereich 206 sind wiederum miteinander verschweißt.

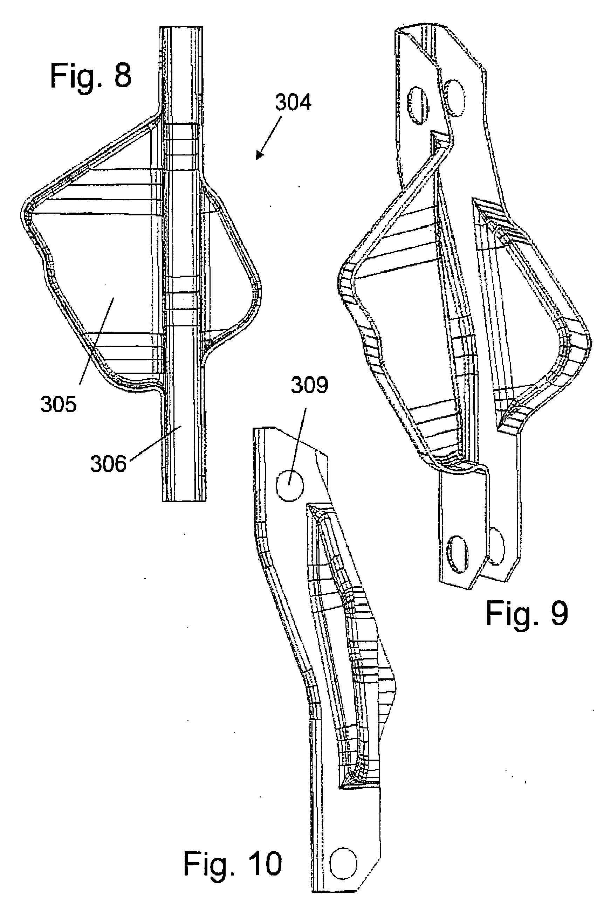

Im Folgenden wird unter Bezugnahme auf die Figuren 8 bis 10 das vierte Ausführungsbeispiel näher erläutert. Hierbei sind gleiche oder gleichwirkende Elemente mit um 300 höheren Bezugszeichen als beim ersten Ausführungsbeispiel versehen.

Im Gegensatz zu den vorigen Ausführungsbeispielen besteht die Anbindung 304 gemäß dem vierten Ausführungsbeispiel aus einem einzigen Teil, welches als Stanz-Biegeteil ausgebildet ist und den Kontaktbereich 305 und den Anbindungsbereich 306 umfasst. Der Kontaktbereich 305 weist einen etwa rechteckförmigen Querschnitt auf (siehe Fig. 8), in welchem der Rand hochgebogen ist, um eine ausreichende Kontaktfläche mit dem entsprechend ausgebildeten Außenprofil des Querträger-Basisteils (nicht dargestellt) zur Verfügung zu stellen, auf welchen dieser Bereich - im Gegensatz zu den vorigen Ausführungsbeispielen - nicht eingeschoben sondern aufgeschoben wird. Der Anbindungsbereich 306 weist eine U-profilförmige Gestalt auf, wobei an den Enden wiederum Durchgangsbohrungen 309 vorgesehen sind.

Neben den dargestellten U-förmigen und rechteckförmigen Profilen für den Anbindungsbereich sind natürlich auch andere Profile, beispielsweise hohlzylindrische, sechseckige oder achteckige Profile, möglich. Hierbei kann es sich insbesondere um Strangpressprofile handeln, jedoch sind insbesondere auch Stanz-, Tiefzieh- und/oder Biegeteile möglich. Als Materialien kommen beispielsweise Aluminium, Magnesium, Stahl oder Legierungen hiervon in Frage.

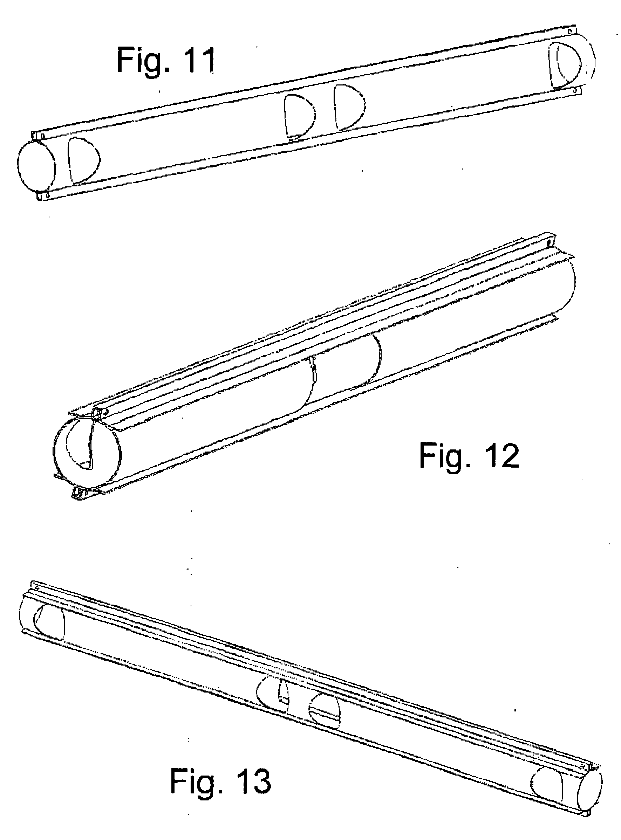

Die Figuren 11 ff. zeigen verschiedene Ausführungsformen von Querträger-Basisteilen. Hierbei zeigt die Figur 11 ein Querträger-Basisteil, das dem Querträger-Basisteil 101 des zweiten Ausführungsbeispiels entspricht. Das Querträger-Basisteil weist mehrere gefräste oder gestanzte Öffnungen für die Luftein- und -ausleitungen auf, da das Querträger-Basisteil in seinem Inneren Luftkanäle aufweist, durch welche Luft von der Klimaanlage in den Fahrzeug-Innenraum gelangt.

Die Figuren 12 und 13 zeigen ein zweites Querträger-Basisteil, welches neben den rechteckförmigen Bereichen sich entlang der Längsrichtung nach oben und unten erstreckende Rippen aufweist.

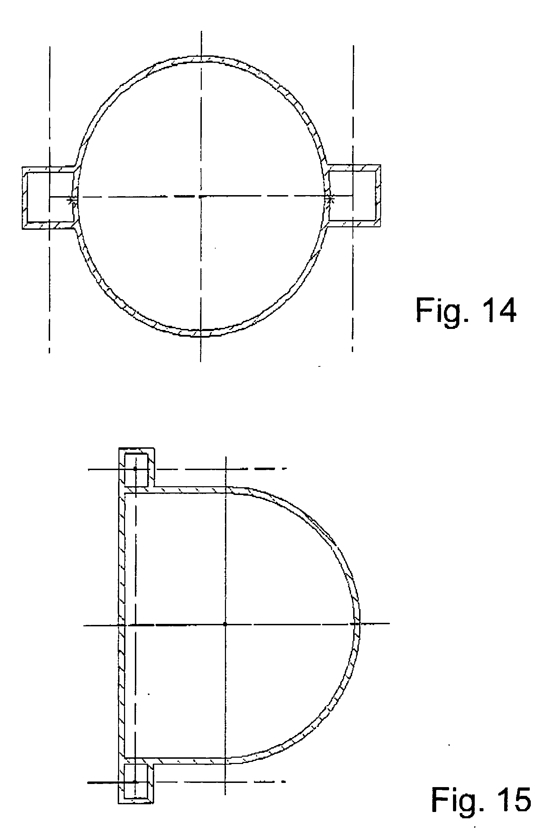

Fig. 14 zeigt ein drittes Querträger-Basisteil, das sich vom zuvor unter Bezugnahme auf Fig. 11 beschriebenen Querträger-Basisteil nur dadurch unterscheidet, dass die rechteckförmigen Bereiche größer ausgebildet sind.

Fig. 15 zeigt ein Querträger-Basisteil mit einem U-förmig geschlossenen Hohlprofil, das am Ende der Schenkel sich seitlich erstreckenden rechteckförmigen Bereiche aufweist.

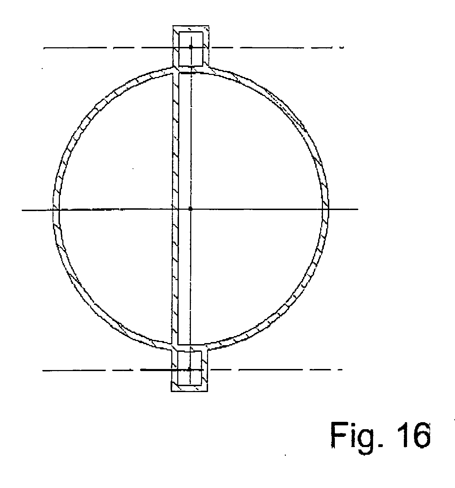

Fig. 16 zeigt ein Querträger-Basisteil mit einem hohlzylindrischen Profil, wobei außenseitig zwei diametral gegenüberliegende rechteckförmige Bereiche vorgesehen sind und eine Seite, die an das hohlzylindrische Profil angrenzt, durchgehend quer durch das hohlzylindrische Profil verlängert ausgebildet ist.

## Patentansprüche

1. Querträger, insbesondere für ein Kraftfahrzeug, wobei der Querträger eine Anbindung (4; 104; 204; 304) aufweist, die zur Anbringung des Querträgers an der Struktur des Kraftfahrzeugs oder zur Anbringung von Bauteilen am Querträger dient, **dadurch gekennzeichnet, dass** der Querträger ein Querträger-Basisteil (1; 101) und mindestens eine Anbindung (4; 104; 204; 304) aufweist, und dass die Anbindung (4; 104; 204; 304) bereichsweise zumindest in Teilbereichen ein dem Innen- oder Außenprofil eines Querträger-Basisteils (1; 101) entsprechendes Außen- bzw. Innenprofil aufweist, welches Teil eines Kontaktbereichs (5; 105; 205; 305) ist.

2. Querträger nach Anspruch 1, **dadurch gekennzeichnet, dass** die Anbindung (4; 104; 204; 304) einen Anbindungsbereich (6; 106; 206; 306) aufweist, welcher mit dem Kontaktbereich (5; 105; 205; 305) verbunden ist.

3. Querträger nach Anspruch 2, **dadurch gekennzeichnet, dass** der Anbindungsbereich (6; 106; 206) und der Kontaktbereich (5; 105; 205) miteinander verschweißt sind.

4. Querträger nach Anspruch 2, **dadurch gekennzeichnet, dass** der Anbindungsbereich (306) und der Kontaktbereich (305) einstückig als Stanz-Biegeteil ausgebildet ist.

5. Querträger nach einem der vorhergehenden Ansprüche, **dadurch gekennzeichnet, dass** die Anbindung (4; 104; 204) einen hohlzylindrischen Kontaktbereich (5; 105; 205) aufweist.

6. Querträger nach einem der vorhergehenden Ansprüche, **dadurch gekennzeichnet, dass** die Anbindung (4; 104; 204; 304) einen U-förmigen oder einen ein rechteckförmiges Hohlprofil aufweisenden Anbindungsbereich (6; 106; 206; 306) aufweist.

7. Querträger nach einem der Ansprüche 2 bis 6, **dadurch gekennzeichnet, dass** der Anbindungsbereich (6; 106; 206; 306) im Bereich seiner Enden mindestens eine Durchgangsbohrung (9; 109; 309) aufweist.

8. Querträger nach einem der Ansprüche 2 bis 7, **dadurch gekennzeichnet, dass** ein Teil des Anbindungsbereichs (306) hülsenartig umgebogen ist und um eine Durchgangsbohrung (309) angeordnet ist.

9. Querträger nach einem der vorhergehenden Ansprüche, **dadurch gekennzeichnet, dass** das Querträger-Basisteil (1) zwei Halbschalen (2, 3) aufweist, die miteinander verbunden sind.

10. Querträger nach einem der vorhergehenden Ansprüche, **dadurch gekennzeichnet, dass** das Querträger-Basisteil in Längsrichtung verlaufende Rippen aufweist.

11. Querträger nach Anspruch 10, **dadurch gekennzeichnet, dass** das Querträger-Basisteil mindestens zwei, insbesondere genau zwei oder genau vier Rippen aufweist.

12. Querträger nach einem der vorhergehenden Ansprüche, **dadurch gekennzeichnet, dass** das Querträger-Basisteil (1; 101) einen Hohlraum zum Durchführen eines Mediums aufweist.

13. Querträger nach einem der vorhergehenden Ansprüche, **dadurch gekennzeichnet, dass** das Querträger-Basisteil in seinem Innenraum und/oder Außenbereich versteifende Elemente aufweist.

14. Querträger nach Anspruch 13, **dadurch gekennzeichnet, dass** die versteifenden Elemente durch mindestens eine Kunststoffstruktur gebildet sind.

15. Querträger nach Anspruch 13 oder 14, **dadurch gekennzeichnet, dass** die versteifenden Elemente durch kreuzförmig verlaufende Rippen oder wabenartige Strukturen gebildet sind.

16. Querträger nach einem der vorhergehenden Ansprüche, **dadurch gekennzeichnet, dass** der Kontaktbereich am Querträger-Basisteil und der entsprechende Anbindungsbereich an der Anbindung jeweils ein Element zur Indexierung, Fixierung und/oder Lageorientierung beziehungsweise ein entsprechendes, komplementäres Element aufweisen.
